# FASCICULE DE BREVET EUROPEEN

(11) **EP 2 000 340 B1**
(45) Date de publication et mention de la délivrance du brevet: **20.10.2010**
(21) Numéro de dépôt: 08157695.1
(22) Date de dépôt: 05.06.2008
(51) Int. Cl.: B60J 1/20, B60R 5/04

(54) **Dispositif d'occultation pour véhicule automobile à pieds de biellette solidarisés par câble, et véhicule correspondant.**
Abdeckungsvorrichtung für Kraftfahrzeug mit über Kabel verbundenen Schwingarmen und entsprechendes Kraftfahrzeug
Vehicle concealment device with swinging arms linked through cable and corresponding vehicle.

(30) Priorité: 08.06.2007 FR 0755587
(43) Date de publication de la demande: 10.12.2008
(73) Titulaire: Advanced Comfort Systems France SAS - ACS France, 79300 Bressuire (FR)
(72) Inventeur: Fourel, Pascal, 35400, SAINT MALO (FR); Juge, Xavier, 49120, SAINT GEORGES DES GARDES (FR)
(74) Mandataire: Bioret, Ludovic

(56) Documents cités:
- EP-A- 0 240 747
- WO-A-02/38404
- DE-A1- 10 025 401

## Description

### 1. Domaine de l'invention

Le domaine de l'invention est celui des véhicules automobiles. Plus précisément, l'invention concerne les dispositifs à écran d'occultation et/ou de protection amovibles. De tels dispositifs peuvent par exemple être des stores à enrouleur, ou des stores pour lesquels l'écran est replié suivant des plis préformés, destinés à être déployés devant des surfaces vitrées d'un véhicule pour se protéger des rayons du soleil , ou bien constituer un dispositif cache-bagages, un dispositif coupe-vent, ...

De façon générale, l'invention peut être mise en oeuvre pour se déployer dans diverses directions, par exemple pour occulter diverses surfaces d'un véhicule, et notamment des surfaces vitrées sensiblement verticales, par exemple au niveau de vitres latérales, et/ou des surfaces vitrées inclinées, par exemple au niveau d'une lunette arrière, ou des surfaces horizontales par exemple au niveau de l'espace de rangement du coffre ou des places arrière d'un véhicule cabriolet.

### 2. Solutions et inconvénients de l'art antérieur

Il est souvent nécessaire de prévoir des moyens d'occultation, pour protéger efficacement l'habitacle et ses occupants du soleil. Des stores à toile, ou rideau, d'occultation amovible formant écran d'occultation, tels que les stores à enrouleur, selon que l'on souhaite ou non occulter la lumière, sont classiquement mis en oeuvre pour l'occultation des surfaces vitrées.

On a également proposé de couvrir ou de libérer l'accès à l'espace de rangement des véhicules à hayon arrière, par exemple de type « monospace » ou « break » à l'aide d'écrans cache-bagages escamotables que l'on peut déployer au dessus de cet espace.

On a aussi proposé des dispositifs coupe-vent à écran d'occultation déployable pour les véhicules de type « cabriolet ».

Une extrémité de l'écran de tels dispositifs d'occultation peut classiquement être entraînée à l'aide d'une barre de tirage, pouvant être actionnée manuellement ou de façon motorisée. Pour déployer l'écran, il suffit donc d'éloigner la barre de tirage du tube d'enroulement.

L'enroulement de l'écran sur le tube d'enroulement à partir de l'autre de ses extrémités est par ailleurs souvent assuré par des moyens de rappel logés à l'intérieur du tube d'enroulement, dénommé usuellement tube à enrouleur dans ce cas. Des moyens de motorisation de la rotation du tube d'enroulement peuvent en outre éventuellement être prévus.

Un problème des dispositifs connus de ce type est que, pour assurer un déploiement ou un repliement convenable de l'écran, le mouvement de la barre de tirage doit être guidé pour que l'axe de la barre de tirage reste en permanence parallèle à celui du tube d'enroulement ou d'un élément fixe du véhicule. Dans le cas contraire, l'écran est mal déployé, de travers, et la toile présente des plis.

On a donc pensé à guider la barre de tirage dans des rails disposés de part et d'autre de celle-ci.

Un inconvénient de cette technique connue est que, dans certaines situations, il n'est pas possible de fixer des rails sur des éléments d'encadrement et/ou d'enchâssement de la surface à occulter, notamment en cas d'absence de ces éléments ou d'un manque de place disponible. On rencontre de telles situations par exemple pour une vitre de portière pouvant coulisser hors du caisson de portière dont les bords ne sont pas guidés entre deux montants.

Un autre inconvénient de cette technique connue est que le montage d'un tel dispositif d'occultation sur le véhicule est complexe. En effet, pour un bon fonctionnement du dispositif d'occultation, le positionnement et l'écartement des rails doit être précis, au risque de bloquer la barre de tirage dans les rails.

On a également pensé à utiliser une paire de leviers, ou un système de deux leviers articulés l'un à l'autre présentant une forme de compas, pour guider la barre de tirage.

De tels leviers et/ou compas sont en particulier nécessaires si aucun autre élément de guidage et/ou de maintien de la barre de tirage n'est prévu.

Il apparaît cependant que si l'un des leviers se déplace plus rapidement que l'autre, il atteint sa position déployée alors que l'autre levier est encore en cours de déploiement et l'écran du dispositif d'occultation est déployé de travers.

Le même problème se pose, de façon encore plus importante, lors du repliement. En effet, il arrive que l'un des leviers se trouve déjà en position repliée, alors que l'autre ne l'est pas encore. Dans ce cas, l'enroulement de l'écran n'est pas satisfaisant, la barre de tirage n'est pas non plus bien positionnée, et l'ensemble risque de bouger et surtout de se bloquer, voire de détériorer le dispositif d'occultation lors du déploiement suivant.

De façon à assurer un guidage satisfaisant des leviers, on a envisagé une première solution technique consistant à motoriser les leviers.

Des exemples de mise en oeuvre d'une telle technique sont par exemple décrits dans le document EP - 0 240 747, qui présente un store pourvu d'un moteur agissant directement ou par l'intermédiaire de tringles rigides sur la position d'un des bras de chacun des leviers.

Un inconvénient de cette première technique connue est qu'elle est complexe et coûteuse à mettre en oeuvre.

Un autre inconvénient est la difficulté d'assurer un réglage identique pour les deux leviers.

Selon une deuxième solution connue, on a cherché à coordonner le mouvement des deux leviers en utilisant des moyens de liaison entre les leviers.

Ainsi, par exemple, le document de brevet FR - 2 799 500 du même titulaire que la présente demande décrit un store dont la barre de tirage est entraînée par deux leviers symétriques reliés entre eux, dont le déplacement est contrôlé à l'aide d'un ressort.

Un inconvénient de cette deuxième technique connue de l'art antérieur est que sa mise en oeuvre reste complexe.

D'autre part, un autre inconvénient de cette technique connue mettant en oeuvre des leviers est qu'elle est souvent peu fiable, par exemple du fait de l'usure et/ou de la déformation permanente des éléments mécaniques de liaison ou de transmission.

Le document WO 02/38404 A décrit un dispositif d'occultation selon le préambule de la revendication 1.

### 3. Objectifs de l'invention

L'invention a notamment pour objectif de pallier ces inconvénients de l'art antérieur.

Plus précisément, l'invention a pour objectif de proposer un dispositif d'occultation dont le déploiement et le repliement de l'écran sont de bonne qualité.

En ce sens, l'invention a notamment pour objectifs particuliers de fournir un tel dispositif d'occultation pour lequel l'axe de la barre de tirage reste en permanence perpendiculaire à la direction de déploiement de l'écran et dont l'écran puisse se replier complètement.

Un objectif important de l'invention est en outre de fournir un tel store dont le procédé de fabrication et de montage reste simple et relativement peu coûteux à mettre en oeuvre.

Un objectif particulier de l'invention est de fournir un tel dispositif d'occultation dont l'écran peut être déployé et replié manuellement.

Encore un autre objectif de l'invention est de fournir un tel dispositif d'occultation pour véhicule automobile qui soit fiable.

Un objectif de l'invention est également de proposer un dispositif d'occultation qui soit léger et dont l'encombrement est réduit lorsqu'il est monté dans le véhicule.

### 4. Exposé de l'invention

Ces objectifs, ainsi que d'autres qui apparaîtront par la suite, sont atteints à l'aide d'un dispositif d'occultation pour véhicule automobile présentant les caractéristiques de la revendication 1.

Ainsi, selon une approche originale et particulièrement simple, les inventeurs proposent de contrôler le déploiement ou le repliement de l'écran d'un dispositif d'occultation, tel que par exemple un store, un coupe-vent ou un dispositif cache-bagages, en agissant uniquement sur la position angulaire d'une biellette, ce qui permet notamment de commander aisément, manuellement ou de façon motorisée, un tel dispositif.

En effet, cette première biellette transmet de façon synchrone à une deuxième biellette un déplacement angulaire opposé à celui de la première biellette, pour permettre de déplacer en permanence la barre de tirage en translation suivant une direction rectiligne.

Il est à noter que, contrairement aux techniques connues, on n'agit pas sur des tiges d'actionnement de levier, entraînées par des éléments d'entraînement déplacés en translation (généralement parallèlement au tube d'enroulement), mais sur des biellettes, par rotation sur l'arbre et autour d'un pivot.

Avantageusement, ledit arbre d'entraînement et/ou ladite première biellette et ladite deuxième biellette portent un élément de roue, et lesdits moyens de transmission comprennent des moyens d'accouplement à inversion de sens de rotation d'un desdits éléments de roue par rapport à l'autre.

Selon un mode de réalisation particulièrement avantageux de l'invention lesdits moyens d'accouplement comprennent un élément en boucle appartenant au groupe comprenant au moins les :
- boucles de câbles ;
- courroies crantées ;
- chaînes ;
dont les brins sont montés croisés et dont au moins deux portions sont solidaires desdits élément de roue.

Ainsi, on inverse simplement le sens de rotation des biellettes en croisant les brins de la boucle.

Par ailleurs, la mise en oeuvre de tels éléments en boucle, rigides et/ou indéformables, permet d'obtenir un dispositif d'occultation fiable.

D'autre part, ces éléments sont souvent de taille réduite ce qui limite l'encombrement de la partie fixe du dispositif d'occultation.

Préférentiellement, un tel dispositif d'occultation comprend un élément de mise en tension agissant sur au moins un desdits brins dudit élément en boucle.

Ainsi, on limite le risque d'un glissement de l'élément de boucle sur les éléments de roue, qui pourrait entraîner un décalage entre les positions angulaires des biellettes et par conséquent que la barre de tirage se place de travers, une des biellettes se déplaçant alors plus vite que l'autre.

Dans au moins un mode de réalisation particulier de l'invention, lesdits moyens de transmission comprennent au moins un câble et au moins un desdits éléments de roue comprend au moins un élément d'indexation dudit câble.

Selon un aspect avantageux de ce mode de réalisation de l'invention lesdits moyens de transmission comprennent deux câbles montés croisés.

Ainsi, comme déjà mentionné pour une variante de ce mode de réalisation particulier, on peut inverser simplement le sens de rotation des biellettes en croisant les câbles.

De façon préférentielle, un tel dispositif d'occultation, comprend un boîtier sur lequel est solidarisé ledit arbre d'entraînement, ledit boîtier contenant au moins un tube à enrouleur dudit écran.

Ainsi le dispositif d'occultation peut être fixé simplement avec ce boîtier sur un élément fixe du véhicule.

Dans au moins un mode de réalisation particulier de l'invention, lesdits moyens d'actionnement comprennent un moteur électrique agissant sur ledit arbre d'entraînement.

Toutefois, il est clair que l'invention peut également s'appliquer aux dispositifs d'occultation manuels.

Selon un autre aspect avantageux de l'invention, l'axe de l'arbre dudit moteur et l'axe de l'arbre d'entraînement sont sécants.

Ainsi, on peut réduire l'épaisseur du dispositif d'occultation, par exemple en plaçant le moteur le long ou à l'intérieur d'un tube d'enroulement, à l'intérieur d'un boîtier supportant les moyens de pivotement des biellettes, ...

Préférentiellement, ledit arbre d'entraînement est relié audit moteur par une courroie et/ou un réducteur.

L'invention telle que présentée concerne également tout véhicule automobile comprenant un des dispositifs d'occultation tels que décrits ci-dessus.

### 5. Liste des figures

D'autres caractéristiques et avantages de l'invention apparaîtront plus clairement à la lecture de la description suivante de deux modes de réalisations particuliers, donnés à titre de simples exemples illustratifs et non limitatifs, et des dessins annexés, parmi lesquels :
- la figure 1 présente un exemple de dispositif d'occultation selon l'invention dans une position déployée intermédiaire ;
- la figure 2 est une vue de détail en coupe de la base de la biellette du store présenté à la figure 1 ;
- les figures 3A et 3B illustrent un autre mode de réalisation d'un dispositif d'occultation selon l'invention.

### 6. Description détaillée

### 6.1. Rappel du principe de l'invention

Le principe général de l'invention repose donc, de façon nouvelle et originale, sur le simple actionnement d'une première biellette solidaire d'un arbre d'entraînement pour contrôler le déploiement ou le repliement de l'écran d'un dispositif d'occultation.

Selon cette approche, une deuxième biellette synchronisée astucieusement avec la première biellette en lui transmettant un déplacement angulaire opposée à cette dernière par l'intermédiaire de l'arbre d'entraînement permet de guider de façon satisfaisante la barre de tirage d'un tel dispositif d'occultation.

### 6.2. Description d'un mode de réalisation particulier de l'invention

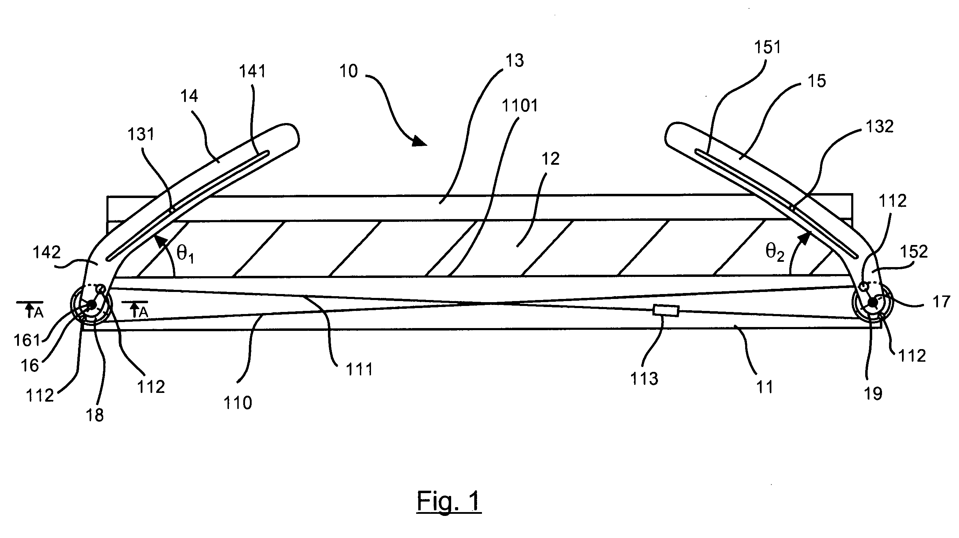

On présente à titre d'exemple un dispositif d'occultation selon l'invention dans une position déployée intermédiaire en référence à la figure 1.

Dans ce mode de réalisation particulier de l'invention illustré par la figure 1, celui-ci se présente sous la forme d'un store à enrouleur 10, destiné à être disposé verticalement pour occulter une vitre arrière de véhicule (et/ou assurer une fonction coupe-vent dans un cabriolet), dont le tube d'enroulement (non représenté) est monté sur paliers dans une cassette, ou boîtier, 11.

Il est clair cependant que l'invention ne se limite pas à cette application particulière, mais peut être mise en oeuvre au sein d'un véhicule automobile dans de nombreuses autres applications nécessitant le déploiement d'un écran d'occultation.

La toile opaque 12 de ce store, formant écran d'occultation, dont une extrémité est solidaire du tube d'enroulement, peut se déployer ou se replier au travers d'une fente 1101 formée dans le boîtier 11. Elle est maintenue tendue par à un ressort de rappel monté sur l'axe du tube d'enroulement.

Une autre extrémité de la toile 12 est fixée sur une barre de tirage 13 entraînée et soutenue par deux biellettes 14 et 15.

Ces première et deuxième biellettes 14 et 15, dont les formes sont symétriques, sont montées en opposition sur la cassette 11, mobiles en rotation, ce qui permet, en les rabattant le long de la cassette, de faire affleurer la barre de tirage avec la cassette, en position repliée. Elles présentent d'autre part une partie coudée dans leurs parties inférieures formant une genouillère, qui procure un aspect plus compact au store en position repliée.

Une lumière courbe 141, 151 est prévue dans chacune des biellettes 14, 15, pour guider un doigt 131, 132 solidaire de chaque extrémité de la barre de tirage 13. La forme convenable de ces lumières a été déterminée de façon que la barre de tirage soit entraînée suivant un mouvement de translation. En effet, on comprend aisément à la vue de la figure 1, par de simples considérations géométriques, que les extrémités de la barre de tirage, qui n'est pas extensible, ne peuvent occuper qu'une seule position pour une position angulaire donnée des biellettes. La barre 13 reste ainsi nécessairement en permanence parallèle au tube d'enroulement lors du déploiement ou du repliement de la toile, si les biellettes se déplacent à la même vitesse, ce qui est satisfaisant car la toile présente alors un aspect tendu homogène.

Dans une variante avantageuse de ce mode de réalisation, il peut également être prévu que chaque extrémité de la barre de tirage présente une fourche comprenant deux branches dont chaque branche est respectivement solidaire d'un doigt dirigé vers l'intérieur de la fourche. Pour entraîner et guider chacune de ces extrémités de la barre de tirage, la biellette à laquelle elle est articulée comprend sur une face un première rainure de forme courbe dans lequel coulisse un premier doigt de la fourche qui se superpose avec une seconde rainure prévue sur une face opposée, dans laquelle coulisse le deuxième doigt de la fourche, une âme de renfort séparant les deux rainures.

Dans ce mode de réalisation particulier de l'invention, l'extrémité inférieure, encore appelé pied 142, de la première biellette 14 est solidaire d'un arbre d'entraînement 161 monté pivotant autour de l'axe de rotation 16 permettant de contrôler et/ou de régler sa position et/ou son déplacement angulaire. D'autre part, le pied 152 de la deuxième biellette est monté libre sur un pivot d'axe de rotation 17 fixé à la cassette 11.

Chaque pied de biellette 142, 152 est solidaire d'un élément de roue se présentant sous la forme d'une poulie 18, 19 dans ce mode de réalisation, et dont l'axe de rotation prolonge l'axe 16, 17 dans la direction horizontale.

Ces poulies 18, 19 sont reliées par une boucle de câble montée entre ces dernières et permettant de les accoupler. Les brins 110, 111 de cette boucle de câble sont croisés pour permettre de transmettre à la deuxième biellette 15 un déplacement angulaire θ₂ opposé au déplacement θ₁ imposé à la première biellette par la rotation de l'arbre 161. En effet, le croisement des brins de la boucle permet de transmettre d'une part un déplacement angulaire contrôlé à la poulie 19 et d'autre part d'inverser le sens de rotation de cette dernière par rapport à la poulie 18.

Afin d'éviter le glissement de la boucle de câble dans la gorge des poulies 18, 19, et de faciliter son montage, deux éléments d'indexation 112 sensiblement sphériques fixés au câble ont été insérés dans des évidements creusés dans la gorge de chacune des poulies 18, 19, ceux-ci étant destinés à empêcher la libération du câble.

Dans des variantes de ce mode de réalisation, il peut également être envisagé pour immobiliser la boucle de câble par rapport à chacune des poulies, d'enserrer une ou plusieurs portions de la boucle de câble dans les flancs des poulies, en la ou les pressant par exemple entre deux demi coques vissées entre elles, ou dans des éléments intermédiaires fixés aux poulies, tels que par exemple les serre-câbles, les taquets coinceurs, ...

Par ailleurs, dans ce mode de réalisation, un tendeur 113 agissant sur le brin 110 permet de régler la tension de la boucle de câble.

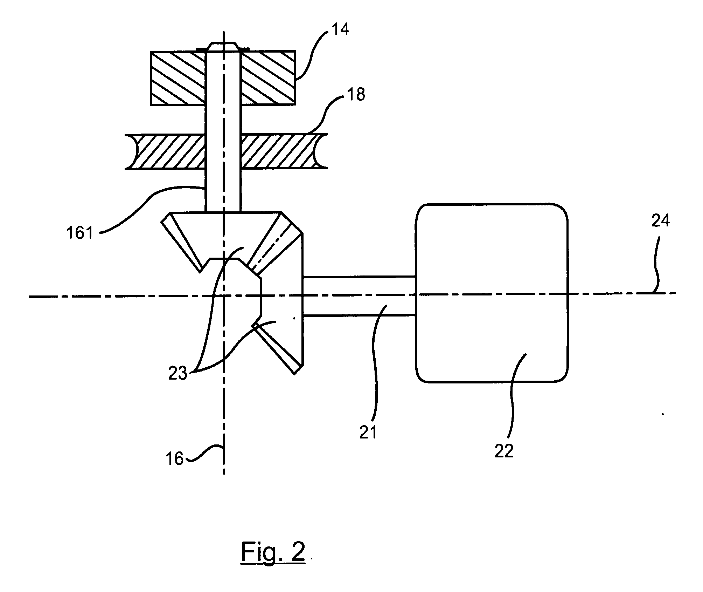

On précise l'actionnement de l'arbre d'entraînement 161 dans une vue en coupe de côté A-A en référence à la figure 2.

La rotation de l'arbre 21 d'un moteur électrique 22 autour de l'axe 24, est transmise à l'arbre 161 à l'aide d'un réducteur à engrenages coniques 23 placé à l'intersection des axes 24 et 16, ce qui permet de contrôler la rotation des biellettes et donc le déploiement ou le repliement de la toile du store. Un bouton de commande déportée (non représenté) est prévu sur le panneau de garniture la portière pour actionner ce moteur électrique à distance.

Dans une variante de ce mode de réalisation particulier de l'invention, il peut également être envisagé d'entraîner l'arbre 161 par l'intermédiaire d'un câble ou d'une courroie reliée à l'arbre d'un moteur. Dans encore une autre variante, il peut être prévu d'accoupler directement l'arbre 161 sur un moteur.

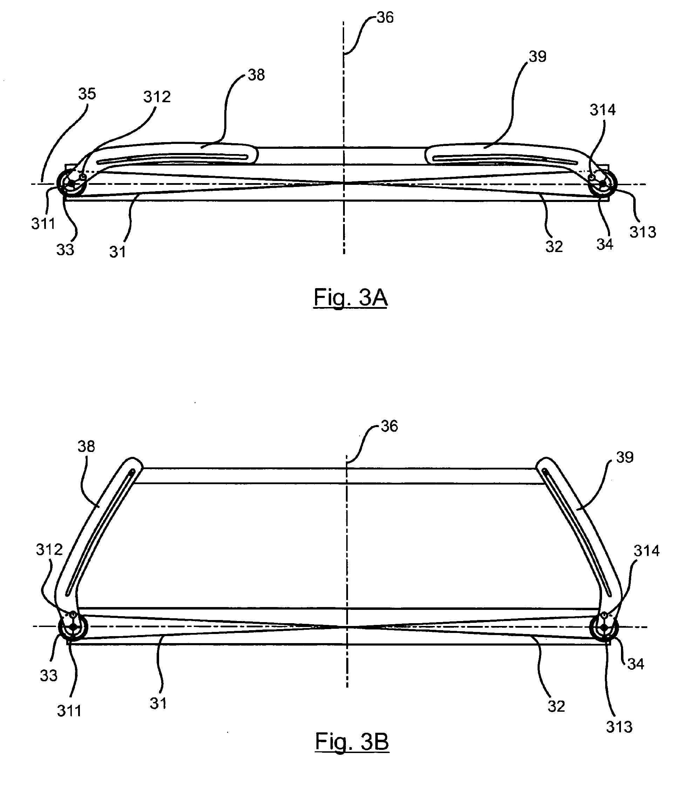

Les figures 3A et 3B illustrent un autre mode de réalisation de l'invention dans lequel les biellettes sont reliées au moyen d'une paire de câbles, respectivement en position repliée et en position complètement déployée.

Il convient de noter sur la figure 3B, en position déployée, que les câbles 31, 32 sont montés symétriquement d'une part par rapport à l'axe 35 reliant les centres des poulies 33 et 34 et d'autre part par rapport au plan de symétrie médian 36 du store, de façon à les maintenir tendus lors de la mise en rotation des poulies.

Une telle position satisfaisante de montage est obtenue en plaçant les poulies 33 et 34 de façon que la disposition des éléments de solidarisation avec les éléments d'indexation 311, 312, 321, 322 fixés à chaque extrémité des câbles 31 et 32 présente une symétrie par rapport à l'axe 35 et par rapport au plan 36 en position déployée. Ainsi, comme on peut le constater sur la figure 3A, chacun des deux câbles 31 et 32 peut rester tendu lorsque la toile est repliée par rotation des biellettes 38, 39.

### 6.3. Autres caractéristiques et avantages de l'invention

La présente invention n'est bien sûr pas limitée au mode de réalisation qui vient d'être décrit. Au contraire, de nombreuses variantes peuvent être envisagées, et notamment :
- l'écran d'occultation se présente sous la forme d'un film souple, d'un panneau rigide tel qu'un vélum ou d'un ensemble articulé de panneaux rigides tel qu'un vélum, ... ;
- l'arbre d'entraînement de la première biellette peut être actionné manuellement ;
- l'écran du dispositif d'occultation peut être avantageusement déployé ou replié en manoeuvrant indifféremment une portion centrale ou excentrée de la barre de tirage et/ou un élément de préhension de forme ergonomique, tel qu'une poignée, prévu à cet effet en une position quelconque de la barre de tirage. En effet, comme il a été mentionné précédemment, l'entraînement et le guidage de la barre de tirage par les biellettes prévient une mise en travers de la barre de tirage, et donc un déploiement ou un repliement inapproprié de l'écran, quelle que soit la position à partir de laquelle la barre de tirage est saisie ;
- l'élément de roue solidaire des moyens de pivotement des biellettes présente une forme en secteur de disque ;
- des biellettes intermédiaires peuvent être placées entre les biellettes et la barre de tirage, l'ensemble des biellettes étant disposé suivant une structure en forme de croisillon permettant le guidage de la barre de tirage ;
- un deuxième moteur peut être prévu pour actionner le tube d'enroulement et réguler la vitesse de déploiement de la toile. Dans une variante, le moteur permettant d'entraîner la première biellette en rotation peut également être utilisé pour actionner le tube ;
- les poulies peuvent être accouplées par l'intermédiaire d'un courroie crantée ou d'une boucle de câble toronné, monté(e) entre celles-ci, et dont les brins sont croisés.

Par ailleurs, l'invention peut bien évidemment être également mise en oeuvre pour occulter l'espace de rangement d'un coffre, pour déployer un écran de protégeant les occupants du véhicule d'une projection d'un objet en cas de choc, pour protéger du vent, ...

## Revendications

1. Dispositif d'occultation (10) pour véhicule automobile comprenant un écran (12) pouvant prendre au moins deux positions, une position repliée et au moins une position déployée, une extrémité dudit écran (12) étant solidaire d'une barre de tirage (13), et deux biellettes (14, 15) assurant le guidage de ladite barre de tirage (13), chacune desdites biellettes (14, 15) étant montée pivotante autour d'un axe de rotation (16, 17),
comprenant des moyens d'actionnement du pivotement d'une première desdites biellettes (14), agissant sur un arbre d'entraînement (161) coïncidant avec l'axe de rotation (16) de ladite première biellette, pour contrôler son déplacement angulaire,
et comprenant des moyens de transmission solidarisant ledit arbre d'entraînement (161) avec une extrémité de la deuxième desdites biellettes (15), lesdits moyens de transmission appliquant à ladite deuxième biellette (15) un déplacement angulaire contrôlé opposé à celui dudit arbre d'entraînement (161) lors du déploiement ou du repliement dudit écran (12),
**caractérisé en ce que** chacune desdites biellettes porte une lumière courbe (141, 151), ou deux rainures de forme courbe.

2. Dispositif d'occultation selon la revendication 1, **caractérisé en ce que** ledit arbre d'entraînement (161) et/ou ladite première biellette (14) et ladite deuxième biellette (15) portent un élément de roue (18, 19),
et **en ce que** lesdits moyens de transmission comprennent des moyens d'accouplement à inversion de sens de rotation d'un desdits éléments de roue (18, 19) par rapport à l'autre.

3. Dispositif d'occultation selon la revendication 2, **caractérisé en ce que** lesdits moyens d'accouplement comprennent un élément en boucle appartenant au groupe comprenant les :
- boucles de câbles ;
- courroies crantées ;
- chaînes ;
dont les brins (110, 111) sont montés croisés et dont au moins deux portions sont solidaires desdits élément de roue (18, 19).

4. Dispositif d'occultation selon la revendication 3, **caractérisé en ce qu'**il comprend un élément de mise en tension (113) agissant sur au moins un desdits brins (110, 111) dudit élément en boucle.

5. Dispositif d'occultation selon l'une quelconque des revendications 1 à 2, **caractérisé en ce que** lesdits moyens de transmission comprennent au moins un câble (31, 32) et **en ce qu'**au moins un desdits éléments de roue (33, 34) comprend au moins un élément d'indexation (311, 312, 321, 322) dudit ou desdits câbles (31, 32).

6. Dispositif d'occultation selon la revendication 5, **caractérisé en ce que** lesdits moyens de transmission comprennent deux câbles (31, 32) montés croisés.

7. Dispositif d'occultation selon l'une quelconque des revendications 1 à 6, **caractérisé en ce qu'**il comprend un boîtier (11) sur lequel est solidarisé ledit arbre d'entraînement (161), ledit boîtier (11) contenant au moins un tube à enrouleur dudit écran.

8. Dispositif d'occultation selon l'une quelconque des revendications 1 à 7, **caractérisé en ce que** lesdits moyens d'actionnement comprennent un moteur électrique (22) agissant sur ledit arbre d'entraînement.

9. Dispositif d'occultation selon la revendication 8, **caractérisé en ce que** l'axe de l'arbre (21) dudit moteur (22) et l'axe dudit arbre d'entraînement (161) sont sécants.

10. Dispositif d'occultation selon l'une quelconque des revendications 8 et 9, **caractérisé en ce que** ledit arbre d'entraînement (161) est relié audit moteur (22) par une courroie et/ou un réducteur (23).

11. Véhicule automobile **caractérisé en ce qu'**il comprend un dispositif d'occultation (10) selon l'une quelconque des revendications précédentes.

## Claims

1. Screening-off device (10) for a motor vehicle, said device comprising a screen (12) which is capable of assuming at least two positions, a folded-up position and at least one deployed position, one end of the said screen (12) being integral with a draw bar (13), and two links (14, 15) which bring about the guidance of the said draw-bar (13), each of the said links (14, 15) being mounted so as to pivot about an axis of rotation (16, 17),
comprising means for activating the pivoting of a first of the said links (14), which means act upon a driving shaft (161) coinciding with the axis of rotation (16) of the said first link in order to control its angular displacement,
and comprising transmission means which render the said driving shaft (161) integral with one end of the second of the said links (15), the said transmission means applying, to the said second link (15), a controlled angular displacement which is oppositely directed to that of the said driving shaft (161) when the said screen (12) is deployed or folded up, **characterised in that** each of the said links carries a curved opening (141, 151) or two grooves of curved shape.

2. Screening-off device according to claim 1, **characterised in that** the said driving shaft (161) and/or the said first link (14) and the said second link (15) carry a wheel element (18, 19),
and **in that** the said transmission means comprise coupling means with reversal of the direction of rotation of one of the said wheel elements (18, 19) in relation to the other.

3. Screening-off device according to claim 2, **characterised in that** the said coupling means comprise an element in the form of a loop belonging to the group comprising:
- cable loops;
- notched belts;
- chains;
the strands (10, 11) of which are fitted in a crossed manner and of which at least two portions are integral with the said wheel elements (18, 19).

4. Screening-off device according to claim 3, **characterised in that** it comprises a tensioning element (113) acting upon at least one of the said strands (110, 111) of the said element in the form of a loop.

5. Screening-off device according to either of claims 1 or 2, **characterised in that** the said transmission means comprise at least one cable (31, 32) and **in that** at least one of the said wheel elements (33, 34) comprises at least one indexing element (311, 312, 321, 322) for the said cable or cables (31, 32).

6. Screening-off device according to claim 5, **characterised in that** the said transmission means comprise two cables (31, 32) which are fitted in a crossed manner.

7. Screening-off device according to any of claims 1 to 6, **characterised in that** it comprises a casing (11) onto which the said driving shaft (161) is fastened, the said casing (11) containing at least one roller tube for the said screen.

8. Screening-off device according to any of claims 1 to 7, **characterised in that** the said activating means comprise an electric motor (22) which acts upon the said driving shaft.

9. Screening-off device according to claim 8, **characterised in that** the axis of the shaft (21) of the said motor (22) and the axis of the said driving shaft (161) are secant.

10. Screening-off device according to either of claims 8 or 9, **characterised in that** the said driving shaft (161) is connected to the said motor (22) by a belt and/or a reduction gear (23).

11. Motor vehicle **characterised in that** it comprises a screening-off device (10) according to any of the preceding claims.

## Patentansprüche

1. Verdunklungsvorrichtung (10) für ein Kraftfahrzeug, einen Schirm (12), der mindestens zwei Positionen, eine zusammengefaltete Position und mindestens eine entfaltete Position, einnehmen kann, wobei ein Ende des Schirms (12) mit einer Zugstange (13) fest verbunden ist, und zwei Schwingarme (14, 15) aufweisend, welche die Führung der Zugstange (13) sicherstellen, wobei jeder der Schwingarme (14, 15) um eine Drehachse (16, 17) schwenkbar angebracht ist,
Betätigungsmittel zur Schwenkung eines Ersten der Schwingarme (14) aufweisend, die auf eine Antriebswelle (161) einwirken, die mit der Drehachse (16) des ersten Schwingarms zusammenfällt, um seine Winkelbewegung zu steuern,
und Übertragungsmittel aufweisend, welche die Antriebswelle (161) mit einem Ende des zweiten der Schwingarme (15) verbinden, wobei die Übertragungsmittel bei der Entfaltung oder der Zusammenfaltung des Schirms (12) eine gesteuerte Winkelbewegung des zweiten Schwingarms (15) bewirken, die zu derjenigen der Antriebswelle (161) entgegengesetzt ist,
**dadurch gekennzeichnet, dass** jeder der Schwingarme mit einer gekrümmten Öffnung (141, 151) oder zwei Nuten von gekrümmter Form versehen ist.

2. Verdunklungsvorrichtung nach Anspruch 1, **dadurch gekennzeichnet, dass** die Antriebswelle (161) und/oder der erste Schwingarm (14) und der zweite Schwingarm (15) ein Radelement (18, 19) tragen,
und **dadurch**, dass die Übertragungsmittel Kupplungsmittel zur Drehrichtungsumkehr eines der Radelemente (18, 19) bezüglich des anderen aufweisen.

3. Verdunklungsvorrichtung nach Anspruch 2, **dadurch gekennzeichnet, dass** die Kupplungsmittel ein schleifenförmiges Element aufweisen, das der Gruppe angehört, welche die
- Kabelschleifen;
- Zahnriemen;
- Ketten
umfasst, deren Trümmer (110, 111) über Kreuz angebracht sind und von denen mindestens zwei Abschnitte mit den Radelementen (18, 19) verbunden sind.

4. Verdunklungsvorrichtung nach Anspruch 3, **dadurch gekennzeichnet, dass** sie ein Spannelement (113) aufweist, welches auf mindestens eines der Trümmer (110, 111) des schleifenförmigen Elements einwirkt.

5. Verdunklungsvorrichtung nach einem der Ansprüche 1 bis 2, **dadurch gekennzeichnet, dass** die Übertragungsmittel mindestens ein Kabel (31, 32) aufweisen, und **dadurch**, dass mindestens eines der Radelemente (33, 34) mindestens ein Element (311, 312, 321, 322) zum Fixieren des oder der Kabel (31, 32) aufweisen.

6. Verdunklungsvorrichtung nach Anspruch 5, **dadurch gekennzeichnet, dass** die Übertragungsmittel zwei Kabel (31, 32) aufweisen, die über Kreuz angebracht sind.

7. Verdunklungsvorrichtung nach einem der Ansprüche 1 bis 6, **dadurch gekennzeichnet, dass** sie ein Gehäuse (11) aufweist, an welchem die Antriebswelle (161) befestigt ist, wobei das Gehäuse (11) mindestens ein Rohr zum Aufwickeln des Schirms aufweist.

8. Verdunklungsvorrichtung nach einem der Ansprüche 1 bis 7, **dadurch gekennzeichnet, dass** die Betätigungsmittel einen Elektromotor (22) aufweisen, der auf die Antriebswelle einwirkt.

9. Verdunklungsvorrichtung nach Anspruch 8, **dadurch gekennzeichnet, dass** die Achse der Welle (21) des Motors (22) und die Achse der Antriebswelle (161) sich schneiden.

10. Verdunklungsvorrichtung nach einem der Ansprüche 8 und 9, **dadurch gekennzeichnet, dass** die Antriebswelle (161) mit dem Motor (22) durch einen Keilriemen und/oder ein Getriebe (23) verbunden ist.

11. Kraftfahrzeug, **dadurch gekennzeichnet, dass** es eine Verdunklungsvorrichtung (10) nach einem der vorhergehenden Ansprüche aufweist.
